# EUROPEAN PATENT APPLICATION

(11) **EP 2 657 568 A2**
(43) Date of publication of application: **30.10.2013**
(21) Application number: 13164999.8
(22) Date of filing: 23.04.2013
(51) Int. Cl.: F16H 1/10, F16H 1/22, F16H 13/02

(54) **External rotation type power generation device having biased power generator**

(30) Priority: 26.04.2012 US 201213456424
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention is to installed one or more than one power generators inside a hub capable of being driven to rotate, the rotation shaft of the power generator and the shaft core of the hub are arranged at different shaft with a biased manner, the hub (11) of the external rotation mechanism includes being installed with blades so as to be driven by the gaseous or liquid fluid, e.g. serving as a wind power generator or hydraulic power generator; or inputting the mechanical rotation kinetic power from the external to directly drive or through a transmission device to drive the hub (11) thereby driving the power generator biasedly installed therein, so with a transmission device installed inside the hub (11), the hub (11) is enabled to perform accelerating driving to the power generator, thereby reducing the volume and weight of the power generator while having the same power capacity.

## Description

### BACKGROUND OF THE INVENTION

### (a) Field of the Invention

The present invention relates to an external rotation type power generation device having biased power generator, which mainly consists of a hub serving as an external rotation mechanism, a biased mechanism, a power generator and a transmission device, wherein the center of the hub is installed with a fasten shaft thereby enabling the hub to be driven by an external force to rotate thereon, the fasten shaft inside the mentioned hub is installed with the biased mechanism having a different shaft core relative to the fasten shaft, and one or more than one of the power generators having the biased shaft cores relative to the fasten shaft are installed on the biased mechanism, the end of the power generator where an input shaft being provided is installed with a gear or a friction wheel by which a transmission device is configured, and the interior of the hub is installed with an inner annular gear or an inner annular friction wheel, such that through the gear or the fiction wheel contacting with the inner annular gear or the inner annular friction wheel, the external rotation mechanism is enabled to drive the biased power generator; and through adjusting the shaft distance between the gear or the friction wheel and the inner annular gear or the inner annular friction wheel, the acceleration speed ratio can be set for increasing the rotation speed of the power generator, thus the volume and weight of the power generator can be reduced while having the same normal rated power capacity.

### (b) Description of the Prior Art

A conventional accelerating transmission mechanism of a power generator having the acceleration function mostly utilizes a planetary gear set to drive a belt or gear for transferring the kinetic power to a load, however the transmission mechanism occupies a relatively larger space; the structure of the power generator being directly installed with the transmission can reduce the loss of transmission efficiency, but the rotation speed of the power generator itself is not increased, so there is an disadvantage of having relatively larger volume while having the same power capacity.

### SUMMARY OF THE INVENTION

The present invention provides an external rotation type power generation device having biased power generator, in which the interior of a hub capable of being driven to rotate is installed with one or more than one power generators, the rotation shaft of the power generator and the shaft core of the hub are arranged at different shaft with a biased manner, thereby configuring the novel external rotation type power generation device having biased power generator, the power generator is installed in the hub of an external rotation mechanism, so with a transmission device installed inside the hub (11), the hub (11) is enabled to perform accelerating driving to the power generator, thereby reducing the volume and weight of the power generator while having the same power capacity.

According to the external rotation type power generation device having biased power generator, the hub (11) of the external rotation mechanism includes being installed with blades so as to be driven by the gaseous or liquid fluid, e.g. serving as a wind power generator or hydraulic power generator; or inputting the mechanical rotation kinetic power from the external to directly drive or through a transmission device to drive the hub (11) thereby driving the power generator biasedly installed therein to operate for providing a power generating function; the power generator installed in the external rotation type power generation device having biased power generator includes the fasten shaft (12) is fixed, the hub (11) is served to be driven, thereby providing a braking function through the damping of the vortex power generating operation of the vortex type electromechanical rotor.

According to another aspect of the present invention, a hub generator comprises: a fixed shaft 12; a hub 11 rotatable around the fixed shaft 12 and carrying a ring wheel 42; an offset mechanism 2 fixedly mounted on the fixed shaft 12; a power generator 3 mounted on the offset mechanism within the hub 11 and having an input shaft 31 in rotary engagement with the ring wheel 42; wherein rotation of the hub 11 drives the power generator 3 via the ring wheel 42 and input shaft 31 to generate electrical power.

The ring wheel 42 can be a ring gear or a friction wheel.

### BRIEF DESCRIPTION OF THE DRAWINGS

FIG. 1 is a frontal cross sectional view showing a power generator and a gear transmission device installed at single side, according to one embodiment of the present invention;
FIG. 2 is a lateral cross sectional view showing the power generator and the gear transmission device installed at single side, according to one embodiment of the present invention;
FIG. 3 is a frontal cross sectional view showing plural power generators and a gear transmission device installed at single side, according to one embodiment of the present invention;
FIG. 4 is a lateral cross sectional view showing the plural power generators and the gear transmission device installed at single side, according to one embodiment of the present invention;
FIG. 5 is a front cross sectional view showing gear transmission devices installed at dual sides and a dual-shaft power generator, according to one embodiment of the present invention;
FIG. 6 is a frontal cross sectional view showing a friction wheel transmission device being installed at single side, according to one embodiment of the present invention;
FIG. 7 is a partial view showing the frontal cross section of the friction wheel transmission device installed at single side, according to one embodiment of the present invention;
FIG. 8 is a schematic view showing the friction wheel transmission device installed at single side and plural biased power generators, according to one embodiment of the present invention;
FIG. 9 is a schematic view showing the friction wheel transmission devices installed at dual sides and the plural biased power generators, according to one embodiment of the present invention;
FIG. 10 is a frontal cross sectional view illustrating the biased device being formed with a pre-stress crank structure and the friction wheel transmission device being installed at single side, according to one embodiment of the present invention;
FIG. 11 is a lateral cross sectional view illustrating the biased device being formed with the pre-stress crank structure and the friction wheel transmission device being installed at single side, according to one embodiment of the present invention;
FIG. 12 is a frontal cross sectional view illustrating the biased device being installed with the pre-stress crank structure and the friction wheel transmission devices being installed at dual sides, according to one embodiment of the present invention;
FIG. 13 is a frontal cross sectional view illustrating the rotor of the power generator being directly driven, according to one embodiment of the present invention;
FIG. 14 is a lateral cross sectional view illustrating the rotor of the power generator being directly driven, according to one embodiment of the present invention;
FIG. 15 is a frontal cross sectional view illustrating the biased device being in a crank state and the rotor of the power generator being directly driven by the hub (11), according to one embodiment of the present invention;
FIG. 16 is a lateral cross sectional view illustrating the power biased device being in a crank state and the rotor of the generator being directly driven by the hub (11), according to one embodiment of the present invention;
FIG. 17 is a schematic structural view illustrating biased locations on two end surfaces of the power generator (3) being respectively and protrudingly installed with a fasten shaft (12'), and a transmission device (4) configured by a gear (41) and an inner annular gear (42) being installed between one end of the power generator (3) and the hub (11), for being driven by the hub (11) rotating on the fasten shaft (12'), according to one embodiment of the present invention;
FIG. 18 is a schematic structural view illustrating biased locations on two end surfaces of a power generator (3') being respectively and protrudingly installed with a fasten shaft (12'), and transmission devices (4), (4') configured by gears (41), (41') and inner annular gears (42), (42') being installed between two ends of the power generator (3') and the hub (11), for being driven by the hub (11) rotating on the fasten shaft (12'), according to one embodiment of the present invention;
FIG. 19 is a schematic structural view illustrating biased locations on two end surfaces of the power generator (3) being respectively and protrudingly installed with a fasten shaft (12'), and the transmission device (4) configured by a friction wheel (44) and an inner annular friction wheel (45) being installed between one end of the power generator (3) and the hub (11), for being driven by the hub (11) rotating on the fasten shaft (12'), according to one embodiment of the present invention;
FIG. 20 is a schematic structural view illustrating biased locations on two end surfaces of the power generator (3') being respectively and protrudingly installed with a fasten shaft (12'), and transmission
devices (4), (4') configured by friction wheels (44), (44') and inner annular friction wheels (45), (45') being installed between two ends of the power generator (3') and the hub (11), for being driven by the hub (11) rotating on the fasten shaft (12'), according to one embodiment of the present invention;

### DESCRIPTION OF MAIN COMPONENT SYMBOLS

11: Hub
112: Shaft hole
111: Housing plate
12, 12': Fasten shaft [Fixed shaft]
113: Bearing
2, 2', 2": Biased mechanism [Offset mechanism]
21, 21', 21": Sleeve structure
22, 22': Fasten structure
23': Fasten arm
231': Convex fin
232': Through hole
24': Mobile arm
241': Convex fin
242': Through hole
243': Shaft pin
25': Elastic unit
26': Torque adjustment plate
261': Latch slot
27": Radially and outwardly extended structure
3· 3': Power generator
3": Power generator having exposed rotor
31, 31': Input shaft
33": Magnetic field structure
34": Rotor
341": Friction material
4, 4': Transmission device
41, 41': Gear
42, 42': Inner annular gear
44, 44': Friction wheel
45, 45', 45": Inner annular friction wheel

### DETAILED DESCRIPTION OF THE PREFERRED EMBODIMENTS

A conventional accelerating transmission mechanism of a power generator having the acceleration function mostly utilizes a planetary gear set to drive a belt or gear for transferring the kinetic power to a load, however the transmission mechanism occupies a relatively larger space; the structure of the power generator being directly installed with the transmission can reduce the loss of transmission efficiency, but the rotation speed of the power generator itself is not increased, so there is an disadvantage of having relatively larger volume while having the same power capacity.

The present invention provides an external rotation type power generation device having biased power generator, in which the interior of a hub capable of being driven to rotate is installed with one or more than one power generators, the rotation shaft of the power generator and the shaft core of the hub are arranged with a biased manner, thereby configuring the novel external rotation type power generation device having biased power generator, the power generator is installed in the hub of an external rotation mechanism, so with a transmission device installed inside the hub (11), the hub (11) is enabled to perform accelerating driving to the power generator, thereby reducing the volume and weight of the power generator while having the same power capacity.

According to the external rotation type power generation device having biased power generator, the hub (11) of the external rotation mechanism includes being installed with blades so as to be driven by the gaseous or liquid fluid, e.g. serving as a wind power generator or hydraulic power generator; or inputting the mechanical rotation kinetic power from the external to directly drive or through a transmission device to drive the hub (11) thereby driving the power generator biasedly installed therein to operate for providing a power generating function; the power generator installed in the external rotation type power generation device having biased power generator includes the fasten shaft (12) is fixed, the hub (11) is served to be driven, thereby providing a braking function through the damping of the vortex power generating operation of the vortex type electromechanical rotor.

The present invention provides an external rotation type power generation device having biased power generator, which mainly consists of a hub serving as an external rotation mechanism, a biased mechanism, a power generator and a transmission device, wherein the center of the hub is installed with a fasten shaft thereby enabling the hub to be driven by an external force to rotate thereon, the fasten shaft inside the mentioned hub is installed with the biased mechanism having a different shaft core relative to the fasten shaft, and one or more than one of the power generators having the biased shaft cores relative to the fasten shaft are installed on the biased mechanism, the end of the power generator where an input shaft being provided is installed with a gear or a friction wheel by which a transmission device is configured, and the interior of the hub is installed with an inner annular gear or an inner annular friction wheel, such that through the gear or the fiction wheel contacting with the inner annular gear or the inner annular friction wheel, the external rotation mechanism is enabled to drive the biased power generator; and through adjusting the shaft distance between the gear or the friction wheel and the inner annular gear or the inner annular friction wheel, the acceleration speed ratio can be set for increasing the rotation speed of the power generator, thus the volume and weight of the power generator can be reduced while having the same normal rated power capacity.

Another structural configuration provided by the present invention is that the biased mechanism is formed in a crank shape, and equipped with an adjustable pre-stress, and the crank end is installed with a power generator, and the inner annular friction wheel inside the hub is served to drive the friction wheel installed on the rotor of the power generator.

One further structural configuration provided by the present invention is to provide a power generator having exposed rotor, and a friction material is directly and annularly provided at the periphery of the rotor of the power generator thereby forming a friction wheel function, or installed with a gear, for being driven to perform accelerating driving by the inner annular transmission friction wheel or the inner annular gear of the external rotation mechanism, thereby interacting with stator magnetic fields formed at the periphery of the power generator for providing a power generating function.

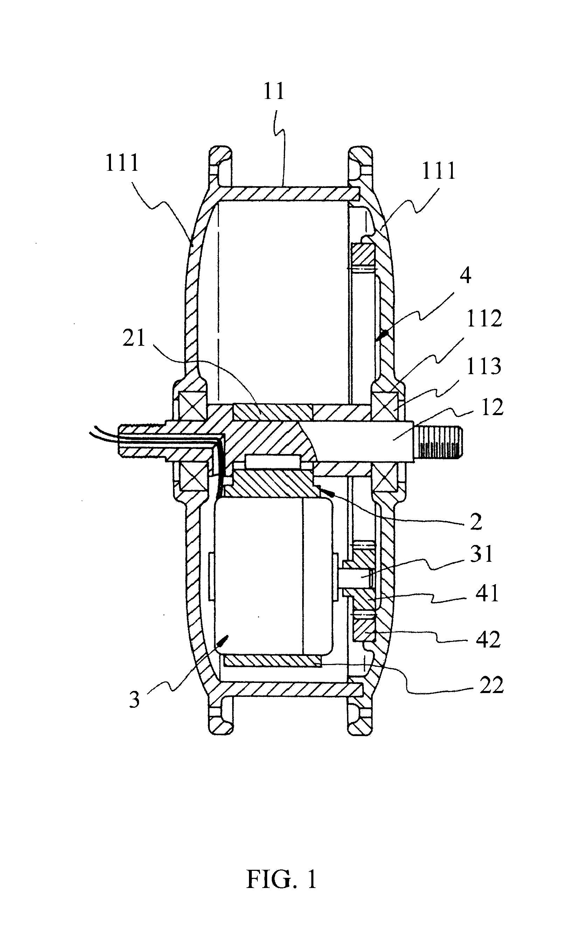

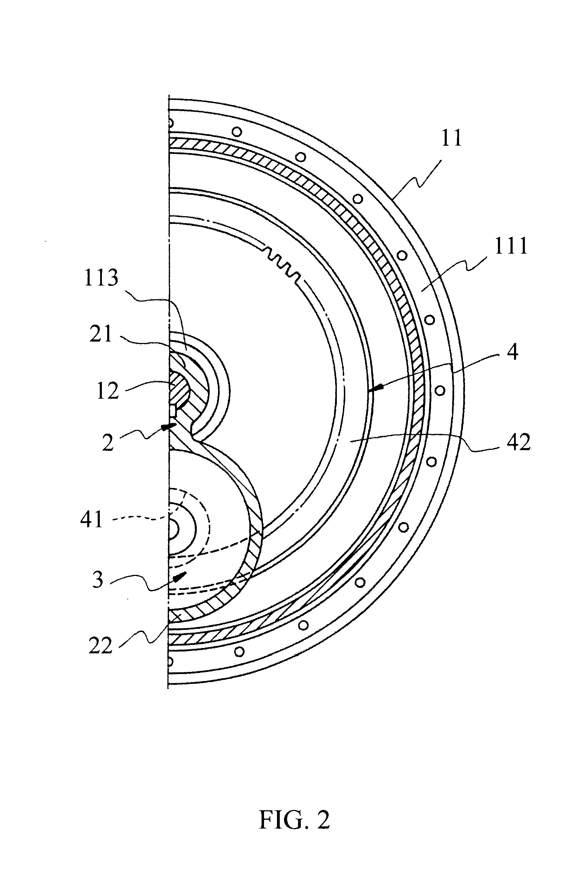

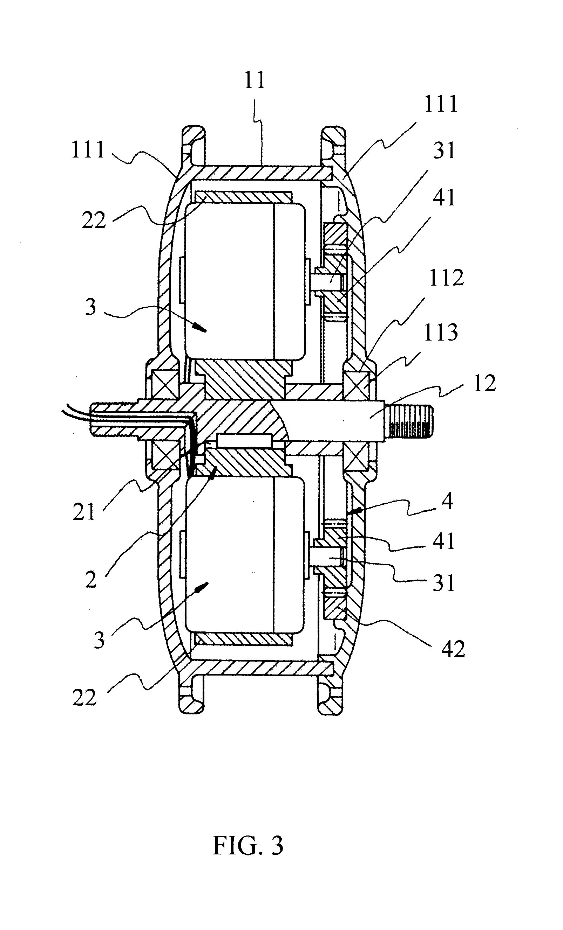

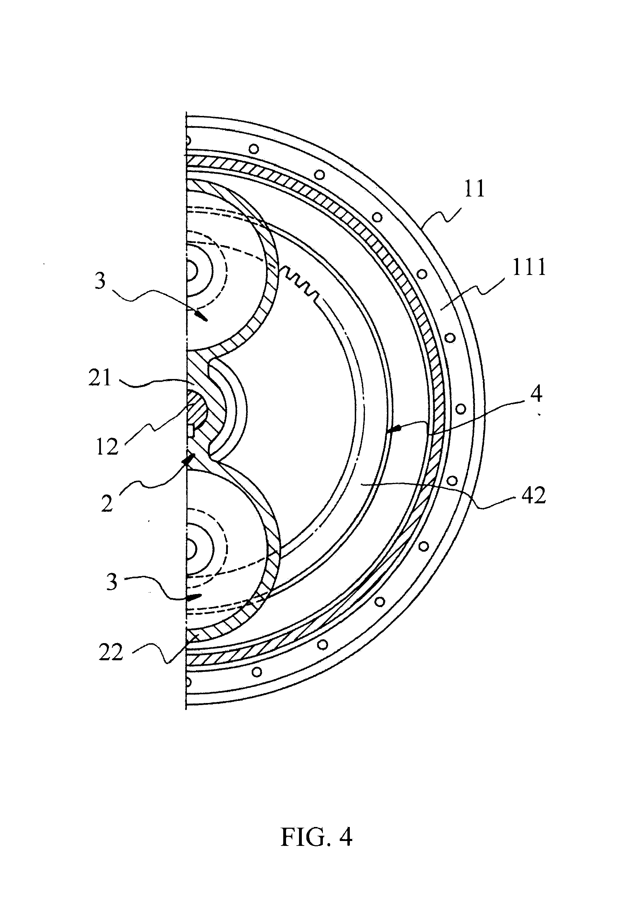

The structural characteristics and other functions and operations of the present invention are illustrated through embodiments and accompanying drawings, as following:
As shown from FIG. 1 to FIG. 4, according to the present invention, the external rotation type power generation device having biased power generator mainly consists of a hub serving as an external rotation mechanism, a biased mechanism (2), a power generator (3) and a transmission device (4), wherein:
   --external rotation mechanism: (as shown in FIG. 1) constituted by a hub (11) having a hollow housing structure, and being configured by two corresponding symmetrical or non-symmetrical recessed disk-shaped housing plates (111), or being configured by two disk-shaped housing and a cylindrical hollow housing, the center of each housing plate (111) is respectively formed with a shaft hole (112) in which a bearing (113) can be respectively installed, and the shaft holes (112) allow a fasten shaft (12) to pass thereby being installed between the two bearings (113), one or two ends of the fasten shaft (12) are used for being installed with other mechanisms, such that the hub (11) configured by the two corresponding housing plates (111) is enabled to be driven to rotate along the fasten shaft (12);
   -- biased mechanism (2): (as shown in FIG. 1 and FIG. 2) having one end being directly combined with the fasten shaft (12) or installed with a sleeve structure (21) for being fastened on the fasten shaft (12) used for coaxially coupling the external rotation mechanism, the sleeve structure (21) is installed on the fasten shaft (12), and the biased mechanism (2) is installed with a fasten structure (22) allowing a power generator (3) to be installed therein; or furthermore (as shown in FIG. 3 and FIG. 4) the central body of the biased mechanism (2) can be directly combined with the fasten shaft (12), or be fastened on the shaft body of the fasten shaft (12) through the installation of the sleeve structure (21), and the structural end extended radially and outwardly are respectively installed with the fasten structure (22) which is utilized for the installation of the power generator (3), the quantity of the fasten structure (22) can be one or more than one thereby allowing one or more than one power generators (3) to be biasedly installed therein, e.g.
      the quantity can be three or four, what shall be addressed is that the disclosed quantity is only served for illustration and the quantity can be determined according to actual needs when the present invention being practiced;
   -- power generator (3): constituted by components including a rotor and a stator, serving as a rotation electromechanical machine capable of converting the rotation kinetic power into the electric power, the power generator (3) can be a brush or brushless, AC or DC power generator, and includes an electromechanical rotor having the magnetic field structure and power generating function, or a vortex type electromechanical rotor having the vortex power generating function, and the magnetic field structure and the electromechanical rotor include the magnetic field structure being fixed and the electromechanical rotor being rotary, or the magnetic field structure being rotary and the electromechanical rotor being fixed, or both of the magnetic field structure and the electromechanical rotor being rotary; the mentioned arrangements can be optionally adopted according to actual needs when the present invention being practiced;
   -- transmission device (4): (as shown from FIG. 1 to FIG. 4) configured by a gear (41) combined at the rotation part of the power generator, and an inner annular gear (42) installed inside the hub (11), wherein the inner annular gear (42) is formed in an annular shape for driving the gear (41) to perform accelerating rotation driving;

As such, as shown in FIG. 1 and FIG. 2, according to the adopted external rotation mechanism disclosed above, the shaft body of the fasten shaft (12) installed inside the hub (11) and coaxially coupled to the hub (11) includes being directly combined with the biased mechanism (2) or through the sleeve structure (21) for fastening the biased mechanism (2), such that the biased mechanism (2) and the fasten shaft (12) are fastened in the hub (11) with a biased manner, the outer end of the biased mechanism (2) is installed with the power generator (3) through the fasten structure (22), the end of the power generator (3) where the input shaft being provided is installed with the gear (41) of the transmission device (4), and the interior of the hub (11) of the external rotation mechanism is directly formed with the inner annular gear (42), or the interior of the hub (11) is combined with the inner annular gear (42) of the transmission device (4) thereby enabling the gear (41) and the inner annular gear (42) to be engaged;

In addition, as shown in FIG. 3 and FIG. 4, according to the present invention and with respect to the actual needs, the biased mechanism (2) can be directly combined with the fasten shaft (12), or through the sleeve structure (21) disposed at the mid part for being fastened on the shaft body of the fasten shaft (12), and the fasten structure (22) radially and outwardly extended is respectively installed with one or more than one of the power generators (3), and the end of the power generator (3) where the input shaft being provided is installed with the gear (41) for the purpose of transmission, the inner annular gear (42) is fastened on a selected side in the hub (11), so the gear (41) and the inner annular gear (42) are enabled to be engaged with each other thereby configuring the transmission device (4), the quantity of the mentioned power generator (3) can be increased according to the actual needs, and the transmission device (4) can also be correspondingly increased.

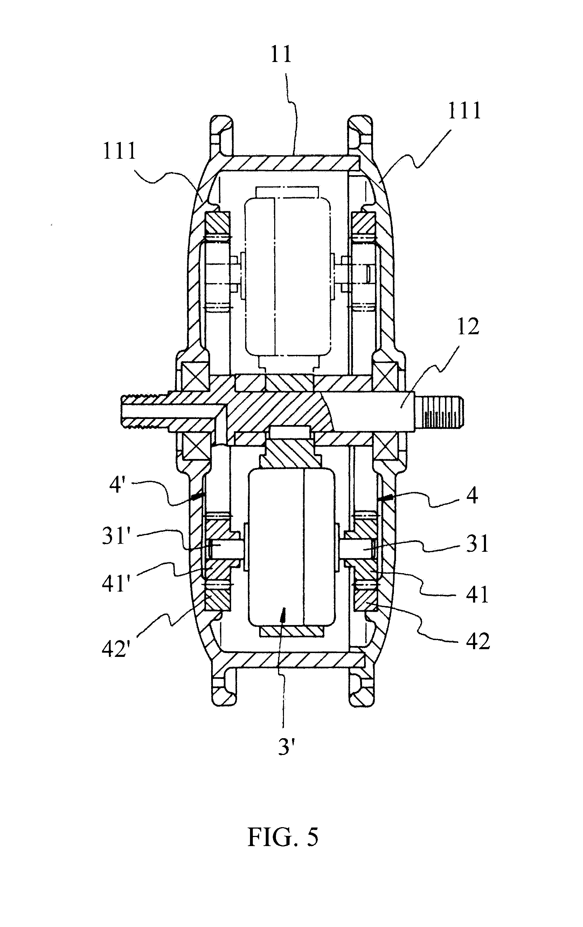

In addition, as shown in FIG. 5, according to the present invention, the one or more than one of the power generators (3) biasedly installed in the hub (11) can further adopt a power generator (3') having dual output shafts and having a rotor with two ends extended with input shafts (31), (31'), so one or more than one of the power generator (3') having the rotor with two ends extended with the input shafts (31), (31') can be installed in the fasten structure (22) disposed at the outer end of the biased mechanism (2), and two ends of the input shafts (31), (31') are respectively installed with the gears (41), (41'), and two inner sides of the two housing plates (111) of the hub (11) of the external rotation mechanism are respectively installed with the inner annular gears (42), (42'), so the gears (41), (41') at two ends of the input shaft of the rotor can be respectively and mutually engaged with the inner annular gears (42), (42') thereby configuring the transmission devices (4), (4'); moreover, more than one power generators (3') having the rotor with two ends extended with input shafts (31), (31') can be installed according to actual needs, so through the corresponding transmission device (4) to be jointly driven by the external rotation mechanism.

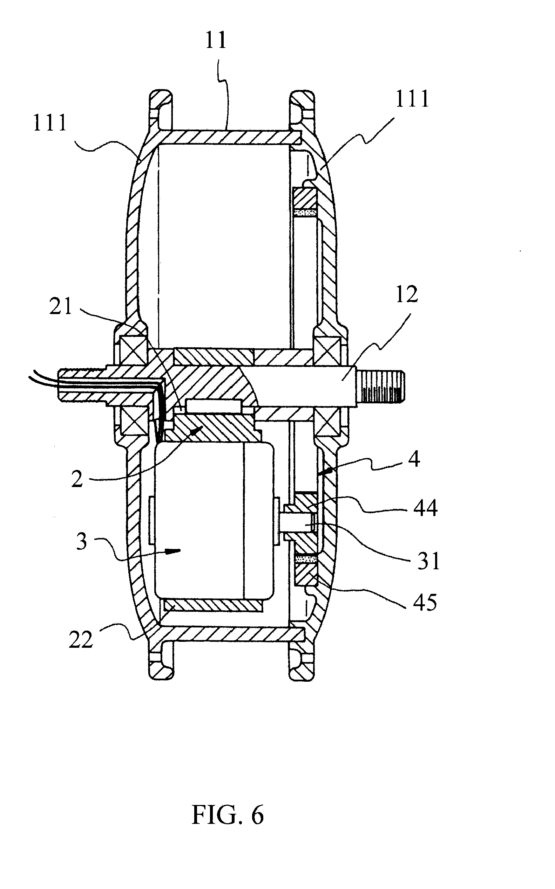

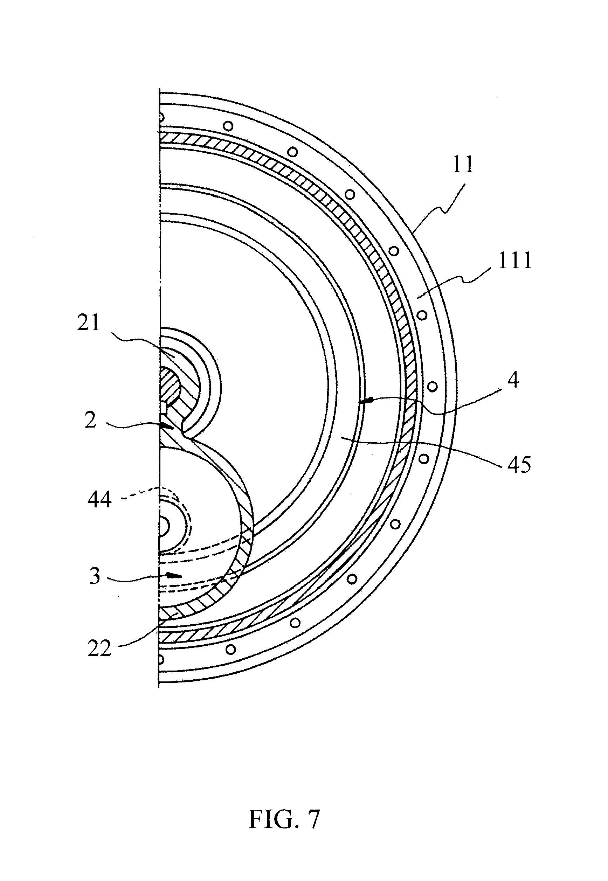

According to the present invention, the external rotation type power generation device having biased power generator consists of the hub of the external rotation mechanism, the biased mechanism (2), the power generator (3) and the transmission device (4), wherein the transmission device includes the transmission device (4) configured by a friction wheel (44) and an inner annular friction wheel (45) for replacing the mentioned transmission device configured by the gear (41) and the inner annular gear (42), which includes: as shown in FIG. 6 and FIG. 7, according to the present invention, the friction wheel (44) and the inner friction wheel (45) configure the transmission device (4), and the friction wheel (44) is installed at the input shaft (31) end of the power generator (3) fastened in the fasten structure (22) disposed at the outer end of the biased mechanism (2), the inner annular friction wheel (45) is fastened at one inner side of the hub (11) of the external rotation mechanism, and inner surfaces of the friction wheel (44) and the inner annular friction wheel (45) are abutted against each other, such that the rotation kinetic power of the hub (11) of the external rotation mechanism can be transferred through the inner annular friction wheel (45) and the friction wheel (44) to the power generator (3) thereby performing the accelerating transmission to the power generator (3), and the hub (11) is coupled to the fasten shaft (12) for rotating thereon.

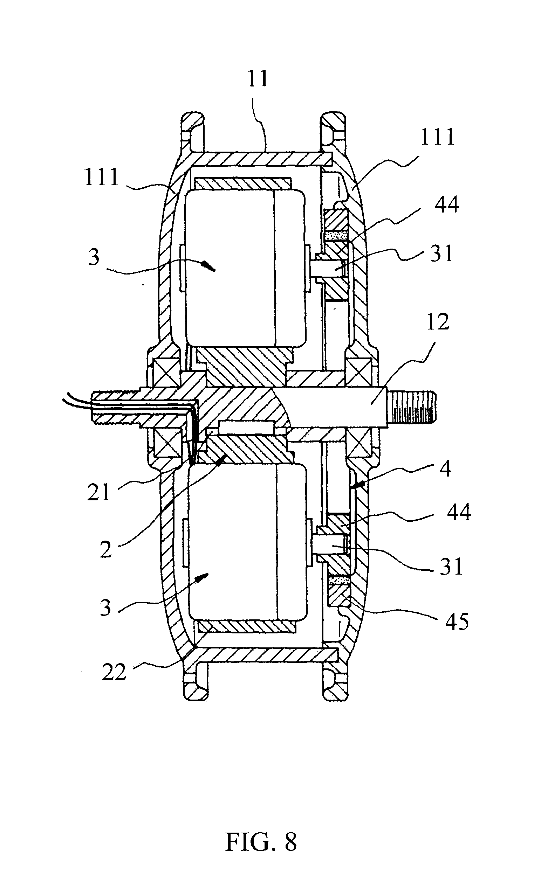

According to the present invention, the external rotation type power generation device having biased power generator can be structured as what is shown in FIG. 8, the fasten structure (22) extended radially and outwardly from the biased mechanism (2) can be installed with two or more than two of the power generators (3), the input shaft (31) of each power generator is respectively installed with the friction wheel (44), and the inner annular friction wheel (45) is fastened at one inner side of the hub (11), inner surfaces of the friction wheel (44) and the inner annular friction wheel (45) are abutted against each other, so the external rotation mechanism is enabled to transfer the kinetic power through the friction wheel (44) and the inner annular friction wheel (45) to the plural power generators (3);

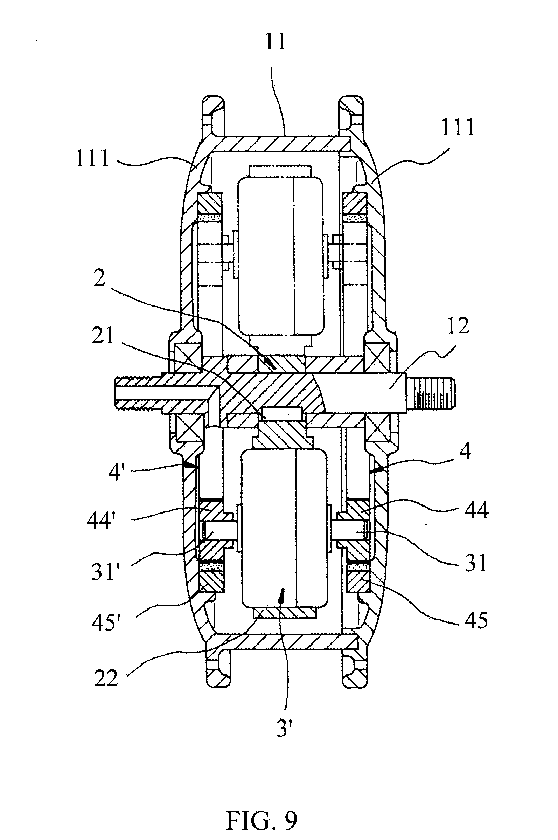

In addition, as shown in FIG. 9, the present invention can adopt the power generator (3') having the rotor with two ends extended with the input shafts (31), (31'), wherein one or more than one of that power generators (3') having the rotor with two ends extended with the input shafts are installed at the outer end of the fasten structure (22) extended radially and outwardly from the biased mechanism (2), the input shafts (31), (31') at two ends are respectively installed with the friction wheels (44), (44') by which the transmission devices (4), (4') are configured, and the inner sides of the two housing plates (111) of the hub (11) of the external rotation mechanism are respectively installed with the inner annular friction wheels (45), (45') by which the transmission devices (4), (4') are configured, so the friction wheels (44), (44') and the inner annular friction wheels (45), (45') are abutted against each other, and the rotating function of the hub of the external rotation mechanism can be served to drive the plural power generators (3') to perform accelerating operation;

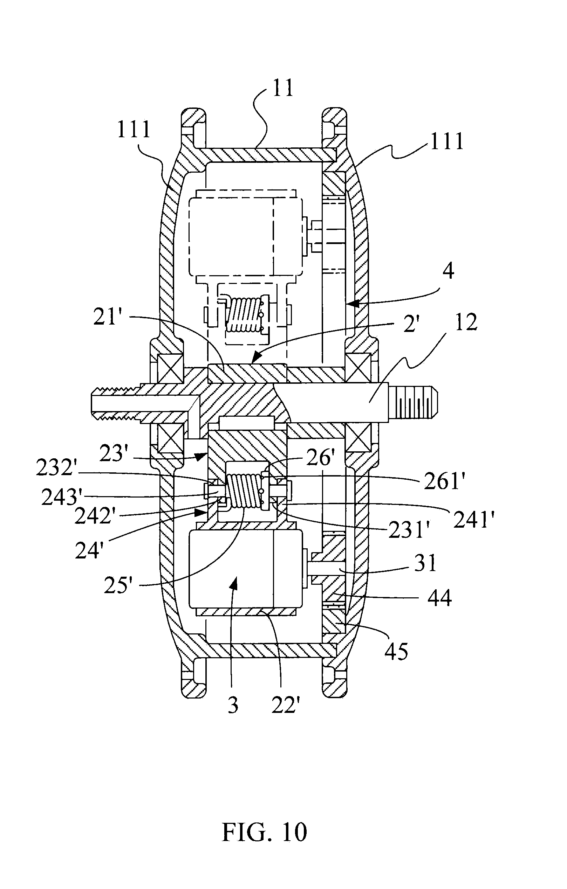

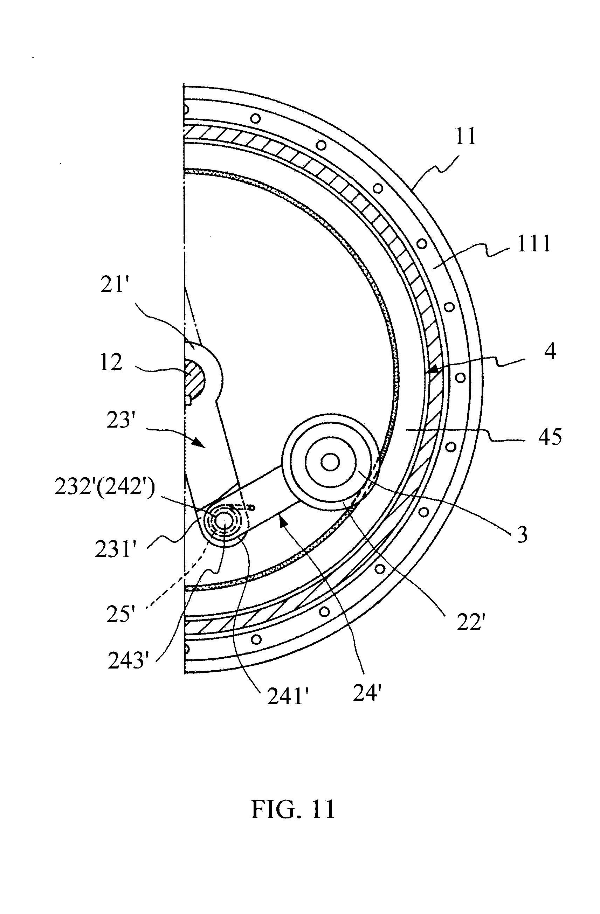

According to the present invention, the external rotation type power generation device having biased power generator can be further structured as what is shown in FIG. 10 and FIG. 11, the biased mechanism (2') is further formed as a crank structure capable of setting pre-stress and elastically bending, the main configuration thereof includes a fasten arm (23'), a mobile arm (24'), a torsion elastic unit (25') and a torque adjustment plate (26'), the top of the fasten arm (23') is installed with the mentioned cylindrical sleeve structure (21') for being sleeved on the fasten arm (12), two ends of the bottom are respectively formed with a convex fin (231'), the lateral wall of the convex fin (231') is formed with a through hole (232'); the distal arm end of the mobile arm (24') is installed with the mentioned fasten structure (22'), and two ends of the top are respectively formed with a convex fin (241'), the lateral wall of the convex fin (241') is formed with a through hole (242'), so the two convex fins (241') can be sleeved with the two convex fins (231') at the distal end of the fasten arm (23'), and an shaft pin (243') is used to pass the through holes (232'), (242'), thereby allowing the mobile arm (24') to be rotary; the torsion elastic unit (25') is a torsion spring which is sleeved on the shaft pin (243') between the two convex fins (241') of the mobile arm (24'), one end thereof is fastened on the mobile arm (24') and the other end thereof is latched on the torque adjustment plate (26'); the torque adjustment plate (26') is formed in a disk-like shape, the inner disk surface is formed with a radial latch slot (261') for receiving the other end of the torsion elastic unit (25'), so the pre-stressed torque of the torsion elastic unit (25') can be adjusted, thereby forming the elastic pre-stress for controlling the mobile arm (24') of the biased mechanism (2'), the mentioned crank structure capable of setting pre-stress and elastically bending can be replaced by other structures having the same function; in the mentioned crank structure capable of adjusting the elastic pre-stress, the biased mechanism (2') can be installed with one or more than one sets of the mobile arms (24'), and the fasten structure (22') at the distal end thereof can be correspondingly and respectively installed with the power generator (3), the input shaft (31) of each power generator is respectively installed with the friction wheel (44), and the inner annular friction wheel (45) is fastened at one inner side of the hub (11), such that inner surfaces of the frictions wheel (44) and the inner annular friction wheel (45) are abutted against each other, and the external rotation mechanism is enabled to transfer the kinetic power through the friction wheel (44) and the inner annular friction wheel (45) to the plural power generators (3), and by means of adjusting the set location between the elastic unit (25') for adjusting the pre-stress and the torque adjustment plate (26'), the contact stress of the friction wheel (44) and the inner annular friction wheel (45) can be adjusted.

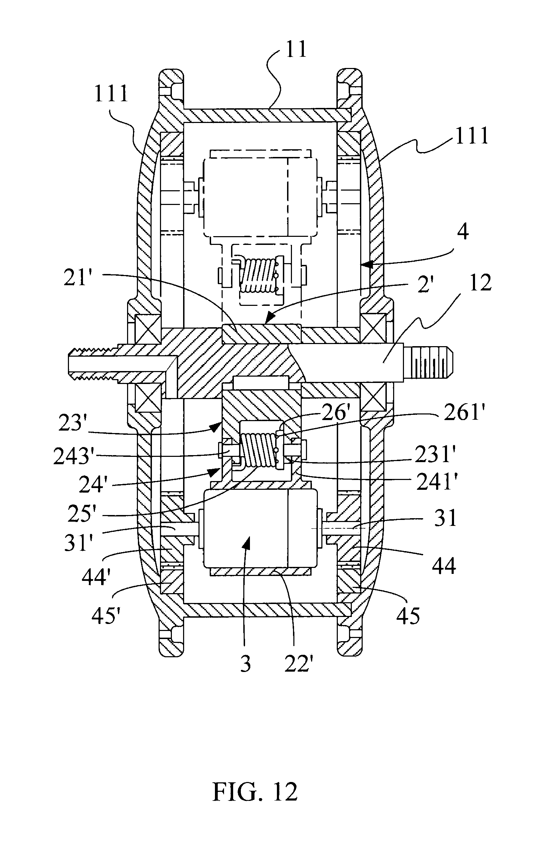

According to the external rotation type power generation device having biased power generator, wherein FIG. 12 is a frontal cross sectional view illustrating the biased device being installed with the pre-stress crank structure and the friction wheel transmission devices being installed at dual sides thereof, according to one embodiment of the present invention; which is installed with the crank structure capable of adjusting the elastic pre-stress as shown in FIG. 10, the biased mechanism (2') can be installed with one or more than one sets of the mobile arms (24'), the fasten structure (22') at the distal end thereof can be correspondingly and respectively installed with the power generator (3'), the input shafts (31), (31') at two ends of the power generator (3') are respectively installed with the friction wheels (44), (44') by which the transmission devices (4), (4') are configured, and the inner annular friction wheels (45), (45') by which the transmission devices (4), (4') are configured are respectively installed at the inner sides of the two housing plates (111) of the hub (11) of the external rotation mechanism, such that the respective frictions wheels (44), (44') and the inner annular friction wheels (45), (45') are mutually abutted against each other, and the rotating function of the hub of the external rotation mechanism can be served to drive the plural power generators (3') to perform accelerating operation, and by means of adjusting the set location between the elastic unit (25') for adjusting the pre-stress and the torque adjustment plate (26'), the contact stress of the friction wheel (44) and the inner annular friction wheel (45) and that of the friction wheel (44') and the inner annular friction wheel (45') can be adjusted.

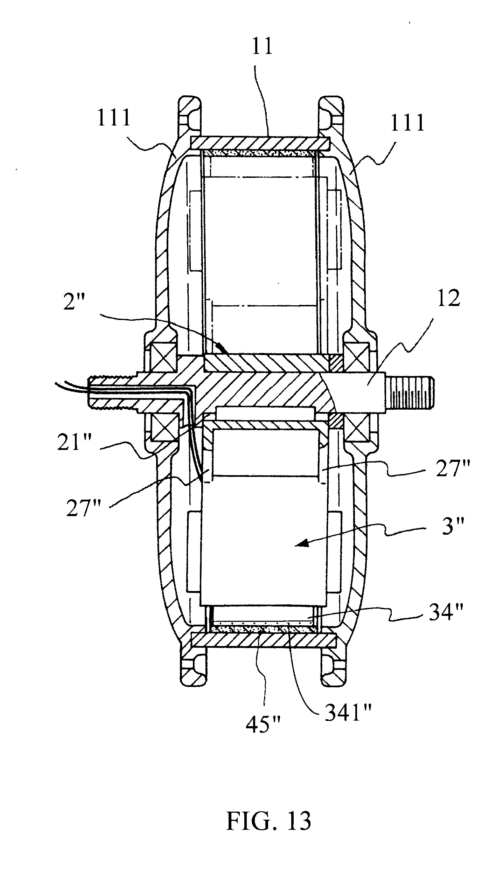

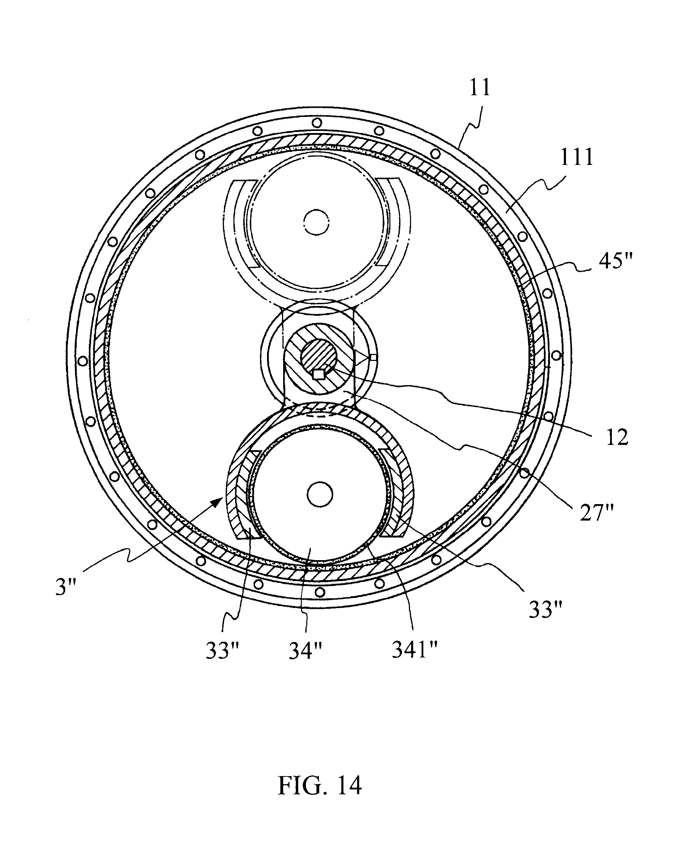

Furthermore, according to the present invention, another configuration of the biased mechanism and the power generator can be structured as what is shown in FIG. 13 and FIG. 14, a radially and outwardly extended structure (27") of a biased mechanism (2") can be installed with one or more than one of power generator having exposed rotor (3"), and the housing of power generator is respectively formed with a magnetic field structure (33") of the power generator, and a rotor (34") is installed between the magnetic field structures (33") thereby configuring the power generator (3"), the body of the cylindrical rotor (34") is exposed outside the magnetic field structure (33"), and the periphery of the rotor (34") is provided with a friction material (341 "); the inner annular periphery of the hub (11) of the external rotation mechanism is installed with an inner annular friction wheel (45"), thereby enabling the inner annular friction wheel (45") to directly perform accelerating driving to the exposed rotor annularly provided with the friction material (341 ");

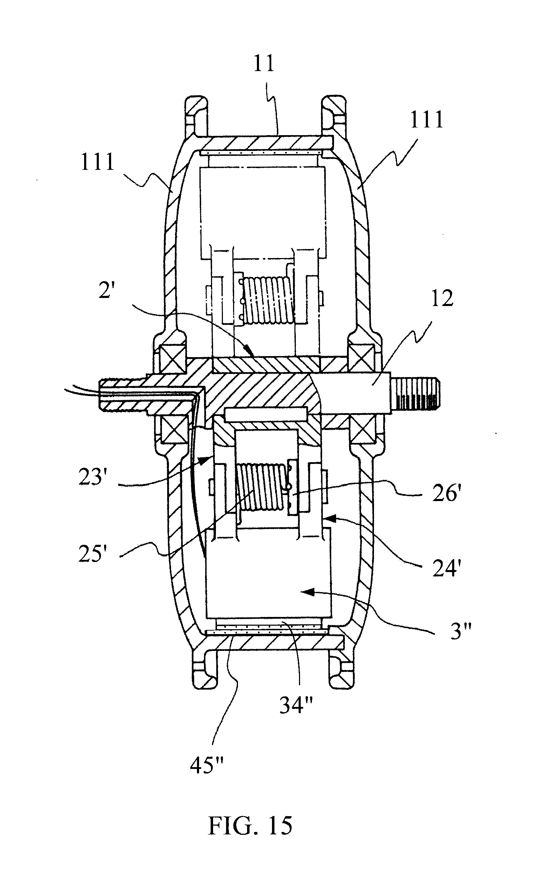

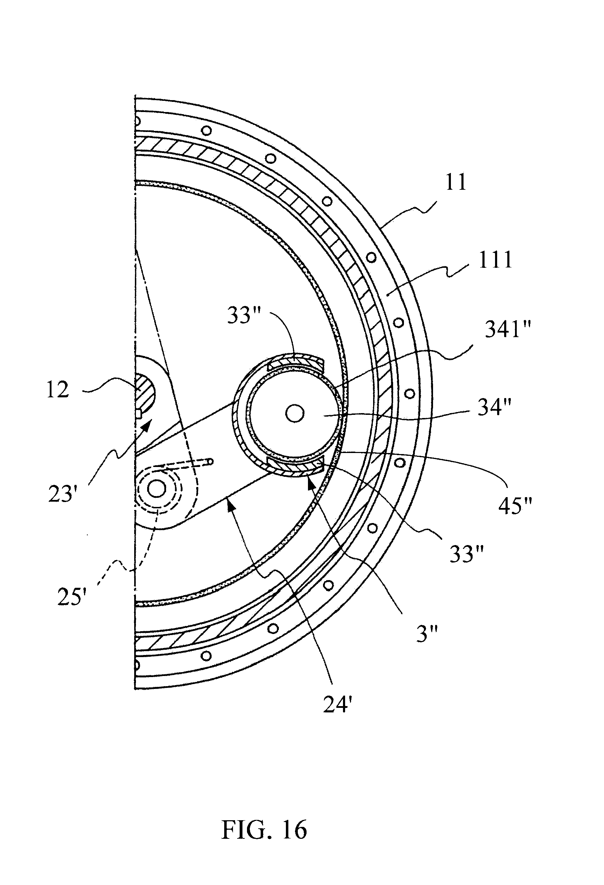

In addition, referring to FIG. 13 and FIG. 14, wherein the power generator having exposed rotor (3") is combined with the biased mechanism, and the rotor is directly driven by the hub of the external rotation mechanism for performing acceleration driving, the mentioned arrangement can also be combined with the crank structure capable of setting pre-stress and elastically bending shown in FIG. 10 and FIG. 11, thereby increasing the transmission efficiency of the power generator and enhancing the operation stability, or as shown in FIG. 15 and FIG. 16, the crank structure capable of setting pre-stress and elastically bending is the same as the crank structure capable of setting pre-stress and elastically bending shown in FIG. 10 and FIG. 11, or can be configured by another structure having the same function.

The mentioned crank structure capable of adjusting the elastic pre-stress includes the biased mechanism (2') being installed with one or more than one sets of the mobile arms (24'), and the distal end thereof is correspondingly installed with one or more than one of the power generator having exposed rotor (3"), and the periphery of the rotor of the power generator is provided with the friction material, and the rotors of the plural power generators are directly driven by the inner annular friction wheel (45") at the inner side of hub of the external rotation mechanism for performing accelerating driving, thereby increasing the operation speed of the power generator (3"), and by means of adjusting the relative set location between the elastic unit (25') for adjusting the pre-stress and the torque adjustment plate (26'), the contact stress of the cylindrical rotor (34") and the inner annular friction wheel (45") can be adjusted.

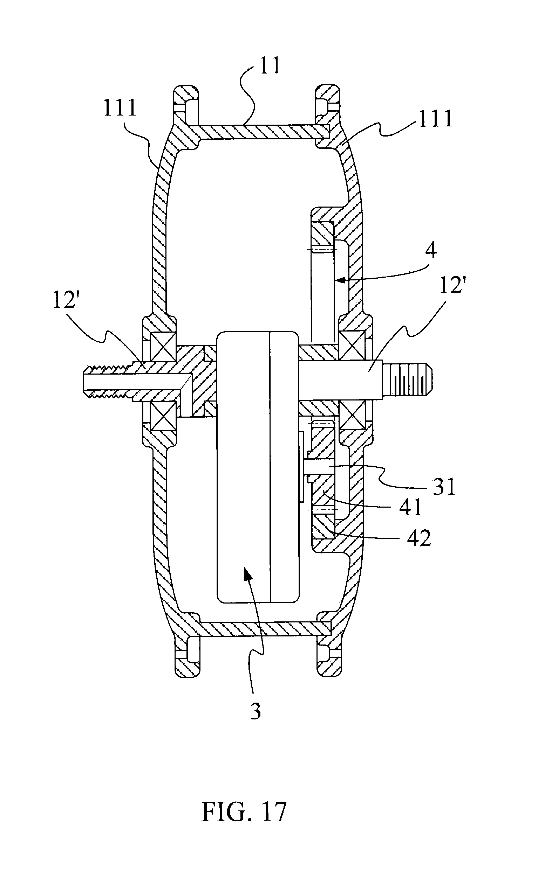

According to the external rotation type power generation device having biased power generator, wherein FIG. 17 is a schematic structural view illustrating biased locations on two end surfaces of the power generator (3) being respectively and protrudingly installed with a fasten shaft (12'), and a transmission device (4) configured by a gear (41) and an inner annular gear (42) being installed between one end of the power generator (3) and the hub (11), for being driven by the hub (11) rotating on the fasten shaft (12'), according to one embodiment of the present invention; the configuration is that two ends of the power generator (3) are directly installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3) is formed, and the input shaft (31) at one end of the power generator allows the gear (41) to be installed for being engaged with the inner annular gear (42) coupled and installed inside the hub (11) for performing accelerating driving, and the transmission device (4) configured by the gear (41) and the inner annular gear (42) enables the hub (11) to accelerate the driving to the power generator (3), thereby reducing the volume and weight of the power generator (3) while having the same power capacity and increasing the operation efficiency.

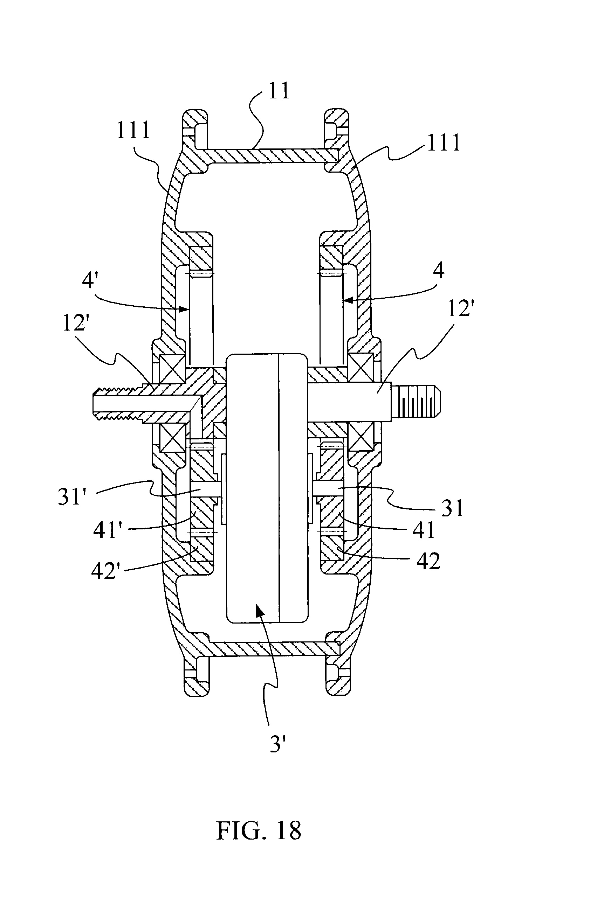

According to the external rotation type power generation device having biased power generator, wherein FIG. 18 is a schematic structural view illustrating biased locations on two end surfaces of the power generator (3') being respectively and protrudingly installed with a fasten shaft (12'), and transmission devices (4), (4') configured by gears (41), (41') and inner annular gears (42), (42') being installed between two ends of the power generator (3') and the hub (11), for being driven by the hub (11) rotating on the fasten shaft (12'), according to one embodiment of the present invention; the configuration is that two ends of the power generator (3') having the rotor with two ends extended with input shafts (31), (31') are installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the generator (3') having the rotor with two ends extended with input shafts is formed, and the input shafts (31), (31') at two ends of the power generator allows the gears (41), (41') to be installed for being engaged with the inner annular gears (42), (42') coupled and installed at two inner sides of the hub (11) for performing accelerating driving, and the transmission device (4), (4') configured by the gears (41), (41') and the inner annular gears (42), (42') enables the hub (11) to accelerate the driving to the power generator (3'), thereby reducing the volume and weight of the power generator (3') while having the same power capacity and increasing the operation efficiency.

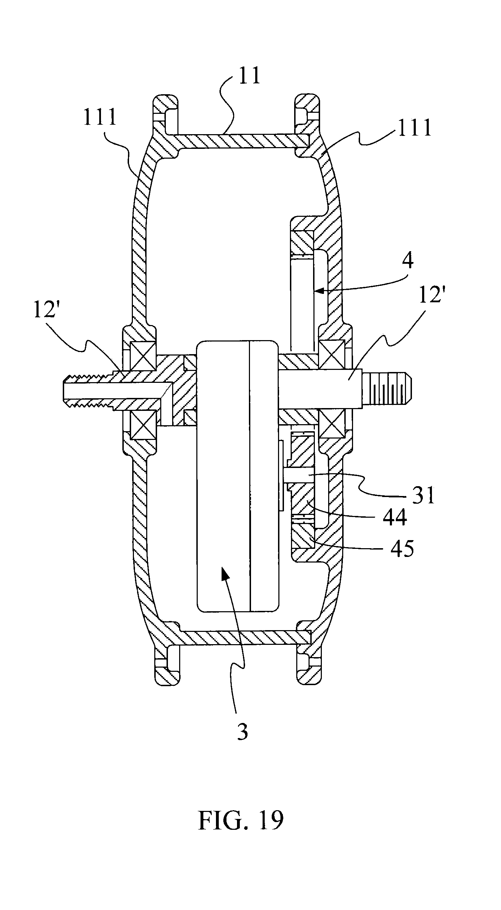

According to the external rotation type power generation device having biased power generator, wherein FIG. 19 is a schematic structural view illustrating biased locations on two end surfaces of the power generator (3) being respectively and protrudingly installed with a fasten shaft (12'), and a transmission device (4) configured by a friction wheel (44) and an inner annular friction wheel (45) being installed between one end of the power generator (3) and the hub (11), for being driven by the hub (11) rotating on the fasten shaft (12'), according to one embodiment of the present invention; the configuration is that two ends of the power generator (3) are directly installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3) is formed, and the input shaft (31) at one end of the power generator allows the friction wheel (44) to be installed for being engaged with the inner annular friction wheel (45) coupled and installed inside the hub (11) for performing accelerating driving, and the transmission device (4) configured by the gear (41) and the inner annular gear (42) enables the hub (11) to accelerate the driving to the power generator (3), thereby reducing the volume and weight of the power generator (3) while having the same power capacity and increasing the operation efficiency.

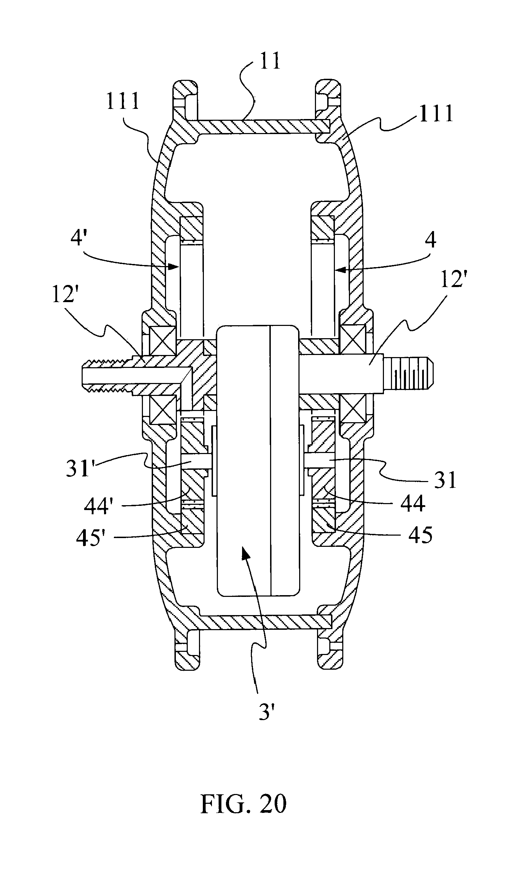

According to the external rotation type power generation device having biased power generator, FIG. 20 is a schematic structural view illustrating biased locations on two end surfaces of the power generator (3') being respectively and protrudingly installed with a fasten shaft (12'), and transmission devices (4), (4') configured by friction wheels (44), (44') and inner annular friction wheels (45), (45') being installed between two ends of the power generator (3') and the hub (11), for being driven by the hub (11) rotating on the fasten shaft (12'), according to one embodiment of the present invention; the configuration is that two ends of the power generator (3') having the rotor with two ends extended with input shafts (31), (31') are installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3') having the rotor with two ends extended with input shafts is formed, and the input shafts (31), (31') at two ends of the power generator (3') allows the friction wheels (44), (44') to be installed for being engaged with the inner annular friction wheels (45), (45') coupled and installed at two inner sides of the hub (11) for performing accelerating driving, and the transmission device (4), (4') configured by the gears (41), (41') and the inner annular gears (42), (42') enables the hub (11) to accelerate the driving to the power generator (3'), thereby reducing the volume and weight of the power generator (3') while having the same power capacity and increasing the operation efficiency.

According to the external rotation type power generation device having biased power generator, the hub (11) of the external rotation mechanism includes being installed with blades so as to be driven by the gaseous or liquid fluid, e.g. serving as a wind power generator or hydraulic power generator; or inputting the mechanical rotation kinetic power from the external to directly drive or through a transmission device to drive the hub (11) thereby driving the power generator biasedly installed therein to operate for providing a power generating function; the power generator installed in the external rotation type power generation device having biased power generator includes one or more functions including: (A) the fasten shaft (12) is fixed, and the hub (11) is served to be driven, thereby providing a power generator function of AC or DC power generating operation and outputting electric power; (B) the fasten shaft (12) is rotary, and the hub (11) is capable of performing rotation driving, one end thereof is served to input the rotation kinetic power, and the other end thereof is served to drive the load, thereby providing a dual-drive coupling transmission function, and generating the coupling torque through the electric power outputted by power generation; (C) the fasten shaft (12) is rotary, and the hub (11) is capable of performing rotation driving, one end thereof is served to input the rotation kinetic power, and the other end thereof is served to drive the load, thereby providing a dual-drive coupling transmission function, and generating the coupling torque through the damping of the vortex power generating operation of the vortex type electromechanical rotor; and (D) the fasten shaft (12) is fixed, and the hub (11) is served to be driven, thereby providing a braking function through the damping of the vortex power generating operation of the vortex type electromechanical rotor.

According to the external rotation type power generation device having biased power generator, with the specially-designed structure of the mentioned biased power generator, the following advantages can be provided:
(I) when the hub (11) is formed in a closed structure, the power generator can also be formed in a closed structure thereby providing double shielding and increasing the closing protection effect, such as waterproof or anti salt damage, or the housing of power generator can be formed in an opened state for increasing the heat dissipation effect;
(II) through the annular gear or friction wheel installed in the hub (11) working with the gear or friction wheel of the rotor of the power generator, an inscribed transmission can be formed thereby increasing the transmission efficiency;
(III) by adopting two or more than two of the power generators, a part or all of the power generators can be selected for jointly generating and outputting electric power with respect to the amount of power generating, such that the power generator is enabled to work in a higher operation efficiency for driving rotation speed and inputting torque;

As what has been disclosed above, the design of the external rotation type power generation device having biased power generator provided by the present invention is novel and equipped with well-defined functions, thus the present invention shall be granted.

## Claims

1. An external rotation type power generation device having biased power generator, which mainly consists of a hub serving as an external rotation mechanism, a biased mechanism, a power generator and a transmission device, wherein the center of the hub is installed with a fasten shaft thereby enabling the hub to be driven by an external force to rotate thereon, the fasten shaft inside the mentioned hub is installed with the biased mechanism having a different shaft core relative to the fasten shaft, and one or more than one of the power generators having the biased shaft cores relative to the fasten shaft are installed on the biased mechanism, the end of the power generator where an input shaft being provided is installed with a gear or a friction wheel by which a transmission device is configured, and the interior of the hub is installed with an inner annular gear or an inner annular friction wheel, such that through the gear or the fiction wheel contacting with the inner annular gear or the inner annular friction wheel, the external rotation mechanism is enabled to drive the biased power generator; and through adjusting the shaft distance between the gear or the friction wheel and the inner annular gear or the inner annular friction wheel, the acceleration speed ratio can be set for increasing the rotation speed of the power generator, thus the volume and weight of the power generator can be reduced while having the same normal rated power capacity; wherein it includes the fasten shaft (12) is fixed, the hub (11) is served to be driven, thereby providing a braking function through the damping of the vortex power generating operation of the vortex type electromechanical rotor;
Said external rotation type power generation device having biased power generator, the hub (11) of the external rotation mechanism includes being installed with blades so as to be driven by the gaseous or liquid fluid, e.g. serving as a wind power generator or hydraulic power generator; or inputting the mechanical rotation kinetic power from the external to directly drive or through a transmission device to drive the hub (11) thereby driving the power generator biasedly installed therein to operate for providing a power generating function.

2. An external rotation type power generation device having biased power generator as claimed in claim 1, which mainly consists of a hub serving as an external rotation mechanism, a biased mechanism (2), a power generator (3) and a transmission device (4), wherein:
-- external rotation mechanism: constituted by a hub (11) having a hollow housing structure, and being configured by two corresponding symmetrical or non-symmetrical recessed disk-shaped housing plates (111), or being configured by two disk-shaped housing and a cylindrical hollow housing, the center of each housing plate (111) is respectively formed with a shaft hole (112) in which a bearing (113) can be respectively installed, and the shaft holes (112) allow a fasten shaft (12) to pass thereby being installed between the two bearings (113), one or two ends of the fasten shaft (12) are used for being installed with other mechanisms, such that the hub (11) configured by the two corresponding housing plates (111) is enabled to be driven to rotate along the fasten shaft (12);
-- biased mechanism (2): having one end being directly combined with the fasten shaft (12) or installed with a sleeve structure (21) for being fastened on the fasten shaft (12) used for coaxially coupling the external rotation mechanism, the sleeve structure (21) is installed on the fasten shaft (12), and the biased mechanism (2) is installed with a fasten structure (22) allowing a power generator (3) to be installed therein; or furthermore the central body of the biased mechanism (2) can be directly combined with the fasten shaft (12), or be fastened on the shaft body of the fasten shaft (12) through the installation of the sleeve structure (21), and the structural end extended radially and outwardly are respectively installed with the fasten structure (22) extended radially and outwardly which is utilized for the installation of the power generator (3), the quantity of the fasten structure (22) can be one or more than one thereby allowing one or more than one power generators (3) to be biasedly installed therein;
-- power generator (3): constituted by components including a rotor and a stator, serving as a rotation electromechanical machine capable of converting the rotation kinetic power into the electric power, the power generator (3) can be a brush or brushless, AC or DC power generator, and includes an electromechanical rotor having the magnetic field structure and power generating function, or a vortex type electromechanical rotor having the vortex power generating function, and the magnetic field structure and the electromechanical rotor include the magnetic field structure being fixed and the electromechanical rotor being rotary, or the magnetic field structure being rotary and the electromechanical rotor being fixed, or both of the magnetic field structure and the electromechanical rotor being rotary;
-- transmission device (4): configured by a gear (41) combined at the rotation part of the power generator, and an inner annular gear (42) installed inside the hub (11), wherein the inner annular gear (42) is formed in an annular shape for driving the gear (41) to perform accelerating rotation driving;
As such, according to the adopted external rotation mechanism disclosed above, the shaft body of the fasten shaft (12) installed inside the hub (11) and coaxially coupled to the hub (11) includes being directly combined with the biased mechanism (2) or through the sleeve structure (21) for fastening the biased mechanism (2), such that the biased mechanism (2) and the fasten shaft (12) are fastened in the hub (11) with a biased manner, the outer end of the biased mechanism (2) is installed with the power generator (3) through the fasten structure (22), the end of the power generator (3) where the input shaft being provided is installed with the gear (41) of the transmission device (4), and the interior of the hub (11) of the external rotation mechanism is directly formed with the inner annular gear (42), or the interior of the hub (11) is combined with the inner annular gear (42) of the transmission device (4) thereby enabling the gear (41) and the inner annular gear (42) to be engaged, the quantity of the mentioned power generator (3) can be increased according to the actual needs, and the transmission device (4) can also be correspondingly increased.

3. An external rotation type power generation device having biased power generator as claimed in claim 2, wherein the one or more than one of the power generators (3) biasedly installed in the hub (11) can further adopt a power generator (3') having dual output shafts and having a rotor with two ends extended with input shafts (31), (31'), so one or more than one of the power generator (3') having the rotor with two ends extended with the input shafts (31), (31') can be installed in the fasten structure (22) disposed at the outer end of the biased mechanism (2), and two ends of the input shafts (31), (31') are respectively installed with the gears (41), (41'), and two inner sides of the two housing plates (111) of the hub (11) of the external rotation mechanism are respectively installed with the inner annular gears (42), (42'), so the gears (41), (41') at two ends of the input shaft of the rotor can be respectively and mutually engaged with the inner annular gears (42), (42') thereby configuring the transmission devices (4), (4'); moreover, more than one power generators (3') having the rotor with two ends extended with input shafts (31), (31') can be installed according to actual needs, so through the corresponding transmission device (4) to be jointly driven by the external rotation mechanism.

4. An external rotation type power generation device having biased power generator as claimed in claim 1, wherein including being consisted of the hub of the external rotation mechanism, the fasten structure (22) extended radially and outwardly of one or more than one biased mechanisms (2), the adapted one or more than one power generators (3) and the transmission device (4), wherein the transmission device includes the transmission device (4) configured by a friction wheel (44) and an inner annular friction wheel (45), which includes:
(A) the friction wheel (44) and the inner friction wheel (45) configure the transmission device (4), and the friction wheel (44) is installed at the input shaft (31) end of the power generator (3) fastened in the fasten structure (22) disposed at the outer end of the biased mechanism (2), the inner annular friction wheel (45) is fastened at one inner side of the hub (11) of the external rotation mechanism, and inner surfaces of the friction wheel (44) and the inner annular friction wheel (45) are abutted against each other, such that the rotation kinetic power of the hub (11) of the external rotation mechanism can be transferred through the inner annular friction wheel (45) and the friction wheel (44) to the power generator (3) thereby performing the accelerating transmission to the power generator (3), and the hub (11) is coupled to the fasten shaft (12) for rotating thereon; or
(B) the power generator (3') having the rotor with two ends extended with the input shafts (31), (31'), wherein one or more than one of that power generators (3') having the rotor with two ends extended with the input shafts are installed at the outer end of the fasten structure (22) extended radially and outwardly from the biased mechanism (2), the input shafts (31), (31') at two ends are respectively installed with the friction wheels (44), (44') by which the transmission devices (4), (4') are configured, and the inner sides of the two housing plates (111) of the hub (11) of the external rotation mechanism are respectively installed with the inner annular friction wheels (45), (45') by which the transmission devices (4), (4') are configured, so the friction wheels (44), (44') and the inner annular friction wheels (45), (45') are abutted against each other, and the rotating function of the hub of the external rotation mechanism can be served to drive the plural power generators (3') to perform accelerating operation.

5. An external rotation type power generation device having biased power generator as claimed in claim 4, wherein the biased mechanism (2') is further formed as one or more than one crank structures capable of setting pre-stress and elastically bending, the main configuration thereof includes a fasten arm (23'), a mobile arm (24'), a torsion elastic unit (25') and a torque adjustment plate (26'), the top of the fasten arm (23') is installed with the mentioned cylindrical sleeve structure (21') for being sleeved on the fasten arm (12), two ends of the bottom are respectively formed with a convex fin (231'), the lateral wall of the convex fin (231') is formed with a through hole (232'); the distal arm end of the mobile arm (24') is installed with the mentioned fasten structure (22'), and two ends of the top are respectively formed with a convex fin (241'), the lateral wall of the convex fin (241') is formed with a through hole (242'), so the two convex fins (241') can be sleeved with the two convex fins (231') at the distal end of the fasten arm (23'), and an shaft pin (243') is used to pass the through holes (232'), (242'), thereby allowing the mobile arm (24') to be rotary; the torsion elastic unit (25') is a torsion spring which is sleeved on the shaft pin (243') between the two convex fins (241') of the mobile arm (24'), one end thereof is fastened on the mobile arm (24') and the other end thereof is latched on the torque adjustment plate (26'); the torque adjustment plate (26') is formed in a disk-like shape, the inner disk surface is formed with a radial latch slot (261') for receiving the other end of the torsion elastic unit (25'), so the pre-stressed torque of the torsion elastic unit (25') can be adjusted, thereby forming the elastic pre-stress for controlling the mobile arm (24') of the biased mechanism (2'), the mentioned crank structure capable of setting pre-stress and elastically bending can be replaced by other structures having the same function; in the mentioned crank structure capable of adjusting the elastic pre-stress, the biased mechanism (2') can be installed with one or more than one sets of the mobile arms (24'), and the fasten structure (22') at the distal end thereof can be correspondingly and respectively installed with one or more than one power generators (3), the input shaft (31) of each power generator is respectively installed with the friction wheel (44), and the inner annular friction wheel (45) is fastened at one inner side of the hub (11), such that inner surfaces of the frictions wheel (44) and the inner annular friction wheel (45) are abutted against each other, and the external rotation mechanism is enabled to transfer the kinetic power through the friction wheel (44) and the inner annular friction wheel (45) to the one or more than one power generators (3), and by means of adjusting the set location between the elastic unit (25') for adjusting the pre-stress and the torque adjustment plate (26'), the contact stress of the friction wheel (44) and the inner annular friction wheel (45) can be adjusted.

6. An external rotation type power generation device having biased power generator as claimed in claim 4, wherein the biased mechanism (2') can be installed with one or more than one sets of the mobile arms (24'), the fasten structure (22') at the distal end thereof can be correspondingly and respectively installed with the power generator (3'), the input shafts (31), (31') at two ends of the power generator (3') are respectively installed with the friction wheels (44), (44') by which the transmission devices (4), (4') are configured, and the inner annular friction wheels (45), (45') by which the transmission devices (4), (4') are configured are respectively installed at the inner sides of the two housing plates (111) of the hub (11) of the external rotation mechanism, such that the respective frictions wheels (44), (44') and the inner annular friction wheels (45), (45') are mutually abutted against each other, and the rotating function of the hub of the external rotation mechanism can be served to drive the plural power generators (3') to perform accelerating operation, and by means of adjusting the set location between the elastic unit (25') for adjusting the pre-stress and the torque adjustment plate (26'), the contact stress of the friction wheel (44) and the inner annular friction wheel (45) and that of the friction wheel (44') and the inner annular friction wheel (45') can be adjusted.

7. An external rotation type power generation device having biased power generator as claimed in claim 4, wherein a radially and outwardly extended structure (27") of a biased mechanism (2") can be installed with one or more than one of power generator having exposed rotor (3"), and the housing of power generator is respectively formed with a magnetic field structure (33") of the power generator, and a rotor (34") is installed between the magnetic field structures (33") thereby configuring the power generator (3"), the body of the cylindrical rotor (34") is exposed outside the magnetic field structure (33"), and the periphery of the rotor (34") is provided with a friction material (341 "); the inner annular periphery of the hub (11) of the external rotation mechanism is installed with an inner annular friction wheel (45"), thereby enabling the inner annular friction wheel (45") to directly perform accelerating driving to the exposed rotor annularly provided with the friction material (341").

8. An external rotation type power generation device having biased power generator as claimed in claim 7, which includes the biased mechanism (2') being installed with one or more than one sets of the mobile arms (24'), and the distal end thereof is correspondingly installed with one or more than one of the power generator having exposed rotor (3"), and the periphery of the rotor of the power generator is provided with the friction material, and the rotors of the plural power generators are directly driven by the inner annular friction wheel (45") at the inner side of hub of the external rotation mechanism for performing accelerating driving, thereby increasing the operation speed of the power generator (3"), and by means of adjusting the relative set location between the elastic unit (25') for adjusting the pre-stress and the torque adjustment plate (26'), the contact stress of the cylindrical rotor (34") and the inner annular friction wheel (45") can be adjusted.

9. An external rotation type power generation device having biased power generator as claimed in claim 1, wherein biased locations on two end surfaces of the power generator (3) are respectively and protrudingly installed with a fasten shaft (12'), and:
(A) a transmission device (4) configured by a gear (41) and an inner annular gear (42) is installed between one end of the power generator (3) and the hub (11), for being driven by the hub (11) rotating on the fasten shaft (12'); the configuration is that two ends of the power generator (3) are directly installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3) is formed, and the input shaft (31) at one end of the power generator allows the gear (41) to be installed for being engaged with the inner annular gear (42) coupled and installed inside the hub (11) for performing accelerating driving, and the transmission device (4) configured by the gear (41) and the inner annular gear (42) enables the hub (11) to accelerate the driving to the power generator (3); or
(B) transmission devices (4), (4') configured by gears (41), (41') and inner annular gears (42), (42') are installed between two ends of the power generator (3') and the hub (11), for being driven by the hub (11) rotating on the fasten shaft (12'); the configuration is that two ends of the power generator (3') having the rotor with two ends extended with input shafts (31), (31') are installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the generator (3') having the rotor with two ends extended with input shafts is formed, and the input shafts (31), (31') at two ends of the power generator allows the gears (41), (41') to be installed for being engaged with the inner annular gears (42), (42') coupled and installed at two inner sides of the hub (11) for performing accelerating driving, and the transmission device (4), (4') configured by the gears (41), (41') and the inner annular gears (42), (42') enables the hub (11) to accelerate the driving to the power generator (3'), thereby reducing the volume and weight of the power generator (3') while having the same power capacity and increasing the operation efficiency.

10. An external rotation type power generation device having biased power generator as claimed in claim 1, wherein the biased locations on two end surfaces of the power generator (3) are respectively and protrudingly installed with a fasten shaft (12'), and:
(A) a transmission device (4) configured by a friction wheel (44) and an inner annular friction wheel (45) is installed between one end of the power generator (3) and the hub (11), for being driven by the hub (11) rotating on the fasten shaft (12'); the configuration is that two ends of the power generator (3) are directly installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3) is formed, and the input shaft (31) at one end of the power generator allows the friction wheel (44) to be installed for being engaged with the inner annular friction wheel (45) coupled and installed inside the hub (11) for performing accelerating driving, and the transmission device (4) configured by the gear (41) and the inner annular gear (42) enables the hub (11) to accelerate the driving to the power generator (3), thereby reducing the volume and weight of the power generator (3) while having the same power capacity and increasing the operation efficiency; or
(B) transmission devices (4), (4') configured by friction wheels (44), (44') and inner annular friction wheels (45), (45') are installed between two ends of the power generator (3') and the hub (11), for being driven by the hub (11) rotating on the fasten shaft (12'); the configuration is that two ends of the power generator (3') having the rotor with two ends extended with input shafts (31), (31') are installed with a fasten shaft (12') at the biased locations at where different to the location of the rotation shaft of the power generator, the fasten shaft (12') penetrates the hub (11) installed on the external rotation mechanism thereby allowing the hub (11) to rotate thereon, therefore the biased structural configuration of the power generator (3') having the rotor with two ends extended with input shafts is formed, and the input shafts (31), (31') at two ends of the power generator (3') allows the friction wheels (44), (44') to be installed for being engaged with the inner annular friction wheels (45), (45') coupled and installed at two inner sides of the hub (11) for performing accelerating driving, and the transmission device (4), (4') configured by the gears (41), (4 1') and the inner annular gears (42), (42') enables the hub (11) to accelerate the driving to the power generator (3'), thereby reducing the volume and weight of the power generator (3') while having the same power capacity and increasing the operation efficiency.
